# EUROPEAN PATENT APPLICATION

(11) **EP 1 103 895 A2**
(43) Date of publication of application: **30.05.2001**
(21) Application number: 00124319.5
(22) Date of filing: 16.11.2000
(51) Int. Cl.: G06F 11/14

(54) **Disk data recovery method**

(30) Priority: 17.11.1999 KR 9951139
(71) Applicant: Finaldata Inc., Seoul (KR)
(72) Inventor: Lee, Chae-Hong, Kangnam-ku, Seoul (KR)
(74) Representative: Modiano, Guido, Dr.-Ing.

(57) **Abstract**

Disclosed is a data recovery method for recovering data when directory information having damaged data is damaged in a hard disk having the damaged data including the steps of: detecting partition information from a hard disk drive having the damaged data; reading boot sector values from the hard disk drive; analyzing disk information according to the detected and the boot sector values; determining a system to be a file allocation table (FAT) file system and recovering the data when the disk is found to use a FAT, and checking whether the disk uses a NTFS, and when the disk is found to use the NTFS, determining it to be a NTFS file system and recovering the data, and checking whether the disk uses a UNIX file system (UFS), and when the disk is found to use the UFS, determining it to be a UFS file system and recovering the data, and when it is not a UFS file system, recovering the data by an unknown file system.

## Description

### BACKGROUND OF THE INVENTION

### (a) Field of the Invention

The present invention relates to a data recovering method. More specifically, the present invention relates to a method for the recovering of data when directory information having damaged data is damaged on a hard disk, a recording media which is readable by the computer.

### (b) Description of the Related Art

In general, a hard disk drive stores data on a magnetic disk and is widely used as a storage device of a computer system because of its high storage capacity. Recently, as personal computers have been greatly disseminated, the use of hard disks has also increased.

Hard disks can be easily damaged or lose data because of physical or electrical shocks, mistakes by the users, overuse, or violations between programs.

With the increasing use of personal computers, nowadays tasks require much more manipulation of computers, and dependence thereon has increased so that many data files are stored on personal computers, and users now perform their work using the stored data files.

However, as the weight of work linked to computers increases, the incurred damage becomes greater when users mistakenly delete stored files, or even entire directories, which store work related files.

Also, when a user executes a vaccine program to remove computer viruses in a storage device, such as a floppy disk that is put into a personal computer, the computer receives some degree of protection from being infected with computer viruses. However, recent computer viruses frequently infect the computers via the Internet, and when this occurs, the data stored in the computer, or even the computer system, itself cannot be used because of the computer viruses.

Various methods for recovering damaged data have been provided, but damaged data of which directory information is damaged on a hard disk cannot be recovered in its original form.

### SUMMARY OF THE INVENTION

It is an object of the present invention to provide a method for recovering data from a hard disk having damaged data when information on the directory having the damaged data is also damaged.

In one aspect of the present invention, a data recovery method for recovering data when directory information in a hard disk having damaged data is damaged, comprises the steps of: (a) detecting partition information from a hard disk drive having the damaged data; (b) reading boot sector values from the hard disk drive; (c) analyzing disk information according to the detected partition information and the boot sector values; (d) determining a system to be a file allocation table (FAT) file system and recovering the data when the disk is found to use a FAT, and checking whether the disk uses a NTFS, and when the disk is found to use the NTFS, determining it to be a NTFS file system and recovering the data, and checking whether the disk uses a UNIX file system (UFS), and when the disk is found to use the UFS, determining it to be a UFS file system and recovering the data, and when it is not UFS file system, recovering the data by an unknown file system; (e) detecting the FAT information and storing the FAT information in a storage device when the disk information is determined to be FAT information in the above step (c); (f) detecting root directory information and storing the root directory information in the storage device; (g) detecting the damaged directory and the damaged file information from data sectors; (h) analyzing directory information to be recovered by using the detected directory information in the step (g), and generating damaged directory information according to the analyzed directory information; and (i) recovering the damaged directory by using damaged directory information, and recovering damaged data by using the recovered directory and file information, and storing the recovered data in a second hard disk.

The step (i) comprises steps of: (i-1) changing initial sizes of data to random sizes in a setup environment; (i-2) registering data found by extension names on a directory recovering screen; (i-3) analyzing and generating information on names and sizes of data by the program itself; (i-4) randomly changing names and sizes of data in a list on the directory recovering screen; (i-5) storing changed names and sizes of the data of the step (l-4); and (i-6) checking sizes of stored data of step (I-5), and when the size is small, returning to the step (I-4).

### BRIEF DESCRIPTION OF THE DRAWINGS

The accompanying drawings, which are incorporated in and constitute a part of the specification, illustrate the embodiment of the invention, and, together with the description, serve to explain the principles of the invention:
FIG. 1 is a flow chart of a method for recovering data from information on damaged directories having damaged data according to the preferred embodiment of the present invention;
FIG. 2 is a flow chart of a method for recovering data in step S230 as shown in FIG. 1; and
FIG. 3 is a flow chart for a detailed explanation of a step of recovering damaged data as shown in FIG. 2.

### DETAILED DESCRIPTION OF THE PREFERRED EMBODIMENTS

In the following detailed description, only the preferred embodiment of the invention has been shown and described, simply by way of illustration of the best mode contemplated by the inventor(s) of carrying out the invention. As will be realized, the invention is capable of modification in various obvious respects, all without departing from the invention. Accordingly, the drawings and description are to be regarded as illustrative in nature, and not restrictive.

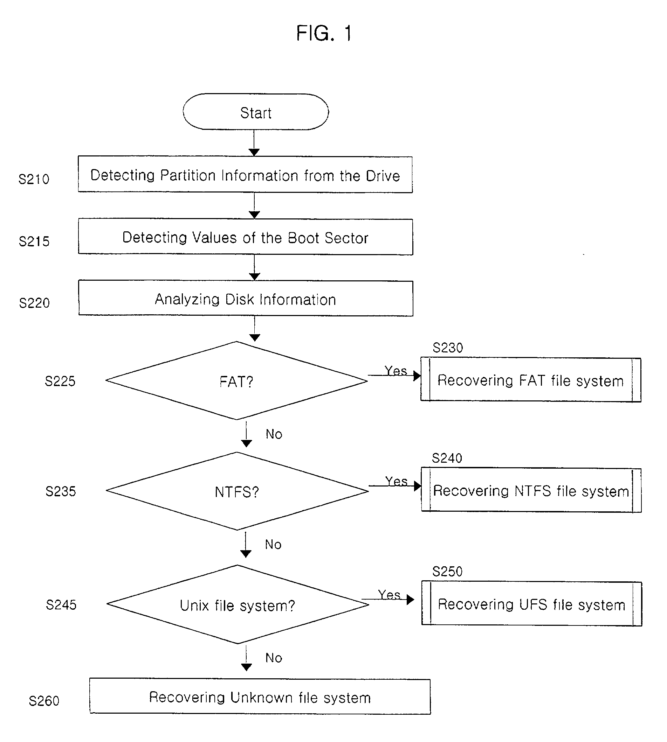

FIG. 1 is a flow chart of a method for recovering data from the information on damaged directories themselves containing damaged data according to the preferred embodiment of the present invention.

As shown in FIG. 1, partition information is read from a damaged hard disk drive in step S210. The partition information has partition divisional information. In detail, the partition information has information needed to divide one drive into many different partitions. Generally, a logical drive formation of a FAT file system comprises a boot sector, a first FAT, a second FAT, a root directory entry, and files. A detailed description on the FAT file system can be obtained from 'Advanced MS DOS Programming' by Duncan, published by Microsoft in 1986 and 1998.

For example, the FAT file system as described below comprises a partition table, a boot sector, a FAT, a root directory, and data sector information.

| | | | | |
|---|---|---|---|---|
| Partition table | Boot sector | FAT | Root directory | Data |

Generally, the partition table has information on a start position and size of each drive when a physical hard disk has been divided into one or more logical drives. For example, in a case of dividing a 4 gigabyte hard disk into two logical drives each of 2 gigabytes in size, the partition table has information that the first logical drive occupies a position from 0 to 2 gigabytes on the hard disk and the second logical drive occupies from 2 to 4 gigabytes (refer to the below struct PARTITION_TABLE).

The boot sector is positioned on a first sector of each partition and has information on the sorts of file systems, the size of the FAT, the total number of sectors, the position of a start cluster, and the sector numbers (refer to the below struct A_BF_BPB=BIOS parameter block).

The FAT detects the position of a cluster that allocates the files and stores the links of the clusters.

The root directory, the highest directory of the files or directories, stores directory structures, file name, start sector, file size, sub directory information, and drive label. When the root directory is damaged, the files cannot be found by a normal operating system.

Hereinafter, the structure of the partition table and the BIOS parameter block (BPB) will be described.

When dividing a hard disk into one or more logical drives, the partition table has information on the allocation of each partition. In more detail, the partition table has the following contents:

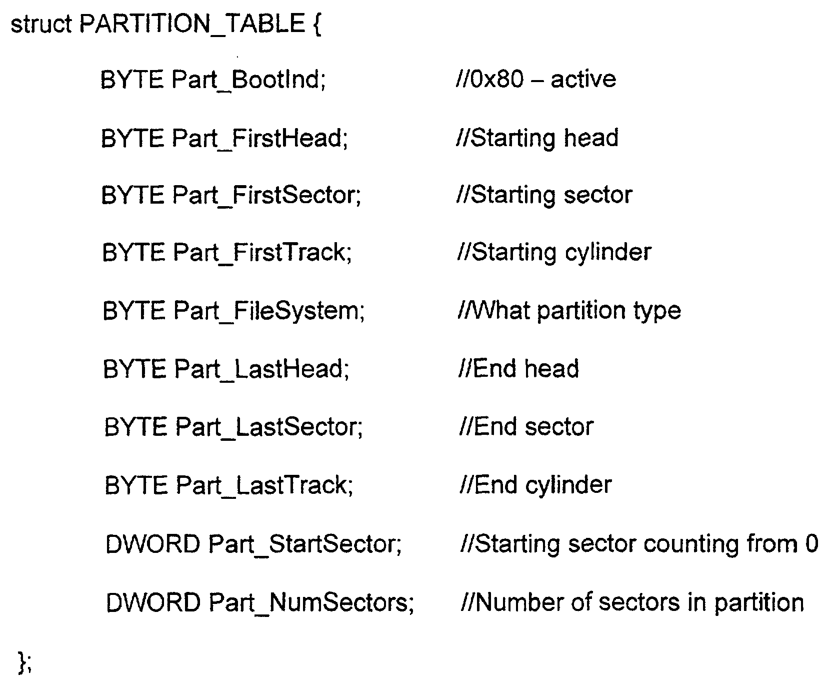

Here, the Part_Bootlnd is '0x80' for a bootable partition, and Part_Bootlnd is '0' for an unbootable partition.

Furthermore, the values of Part_FileSystem have the following meanings:

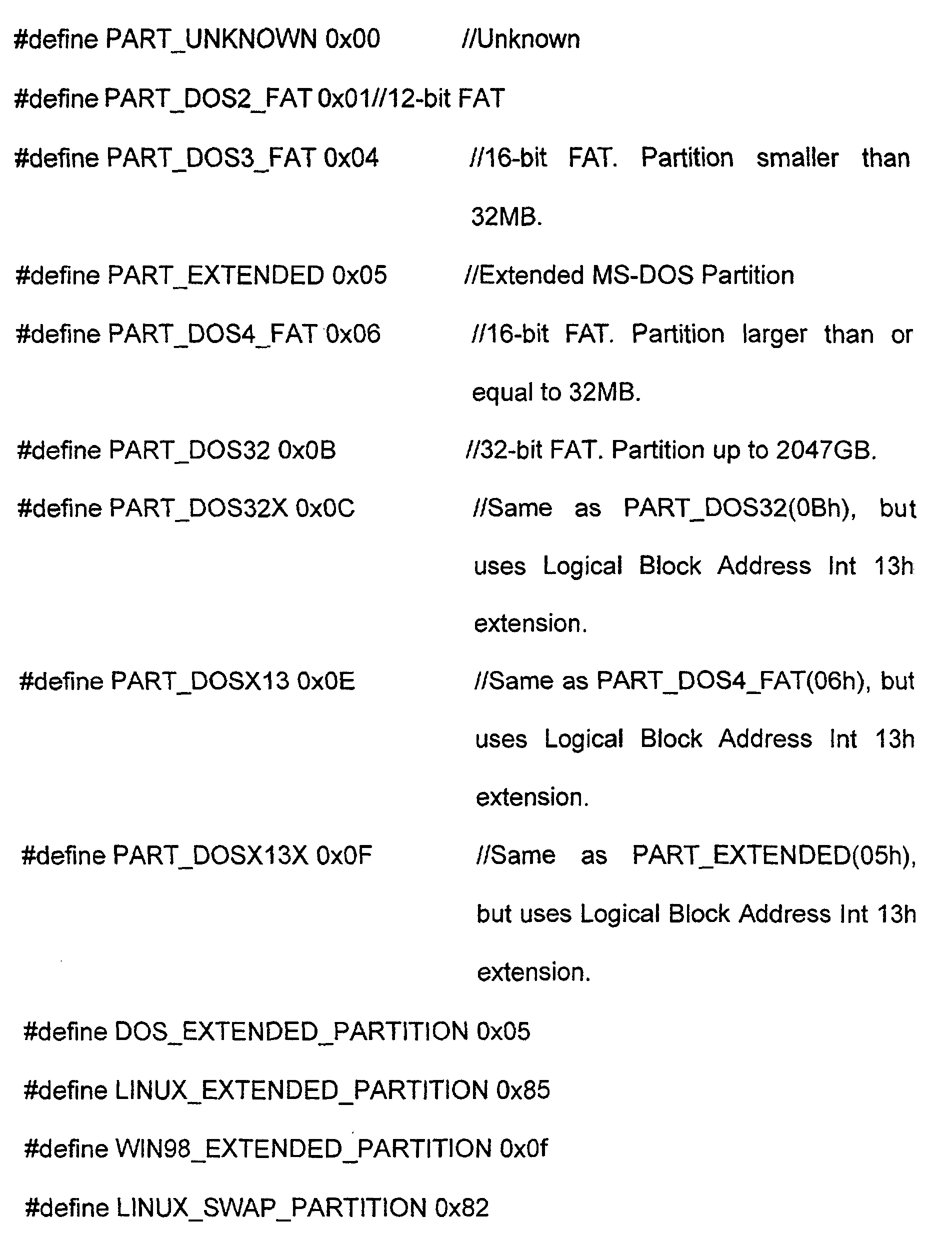

Values of the boot sector are detected in step S215, and the disk information is analyzed based on the values of the boot sector in step S220. At this time, the boot sector generally contains the file system information for one drive. For example, FAT16, FAT32, and NT (Windows NT) file systems (NTFS) have boot sectors with different information. As one example, the structure of the BPB of the boot sector used in the FAT32 is as follows:

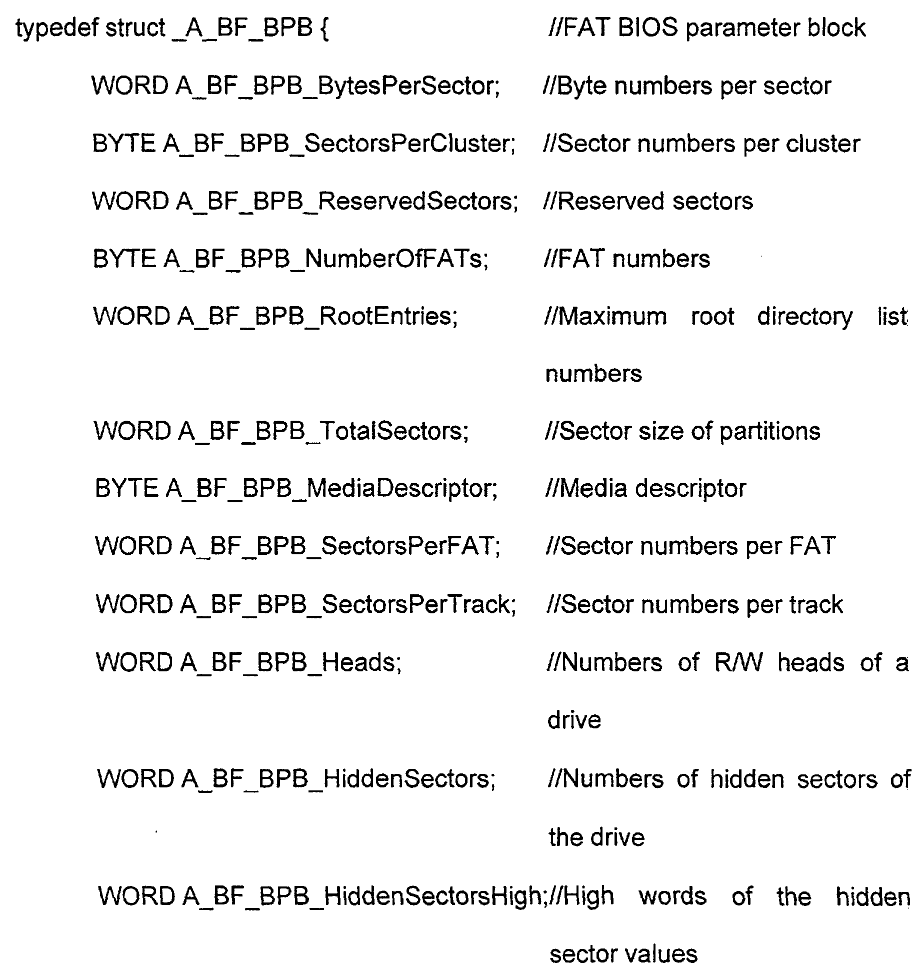

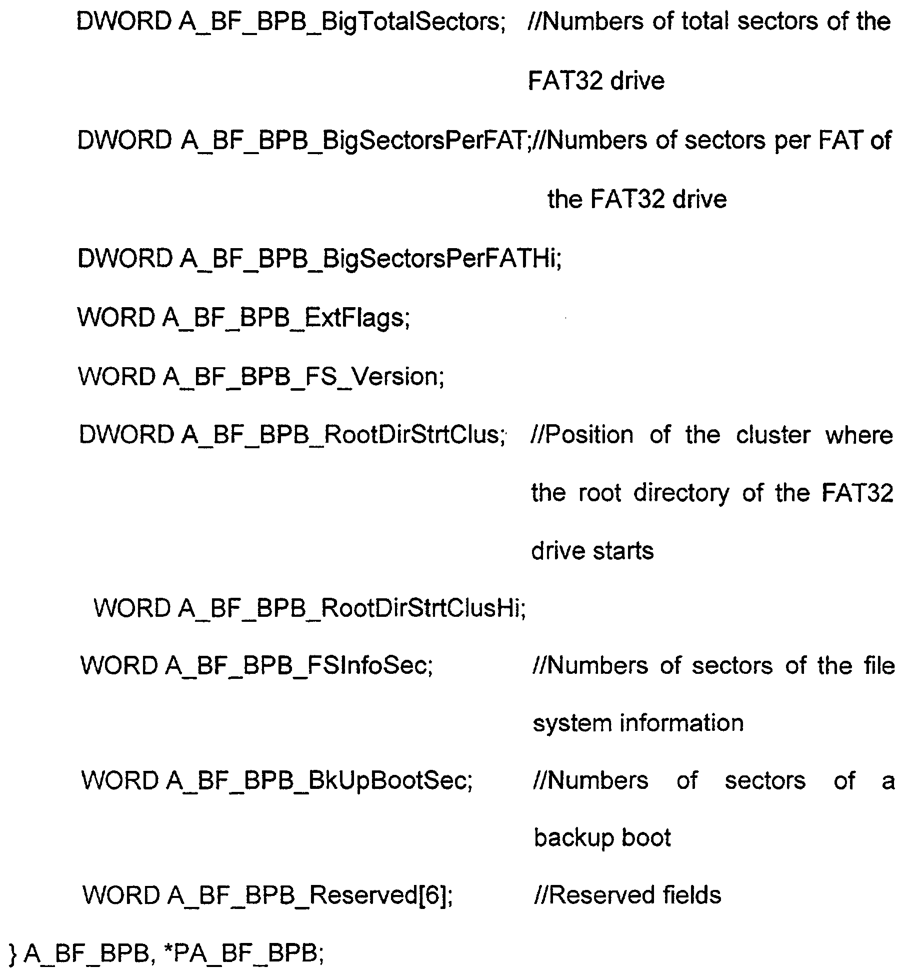

The disk information is analyzed in step S220, and if the disk is found to use a FAT in step S225, then it is determined to be a FAT file system and the data are recovered in step S230. And it checks whether the disk uses a NTFS in step S235, and when the disk is found to use a NTFS, then it is determined to be a NTFS file system and the data are recovered in step S240. It checks whether the disk uses a Unix file system in step S245, and when the disk is found to use a UFS, then it is determined to be a UFS file system and the data are recovered in step S250. When it is not a UFS file system, the data is recovered by the unknown file system in step S260.

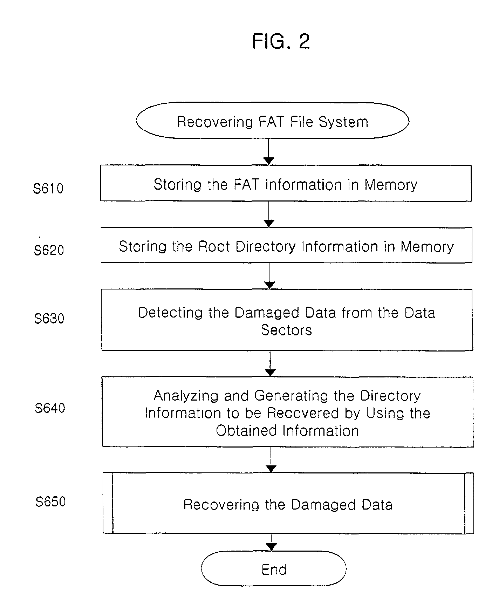

FIG. 2 is a flow chart of a method for recovering data in step S230 as shown in FIG. 1.

Referring to FIG. 2, the FAT information of the hard disk is detected and then stored in a memory in step S610, and the root directory information is detected and then stored in the memory in step S620.

In the event that the data sectors do not have directory information and only have data, the data sectors are analyzed according to data types (file formats), and damaged data is detected in step S630.

By using the information obtained in the previous steps S610 through S630, the directory information to be recovered is analyzed, and the directory is generated using the analyzed directory information in step S640.

The damaged directory is recovered, and the damaged data stored in the recovered directory are recovered in step S650.

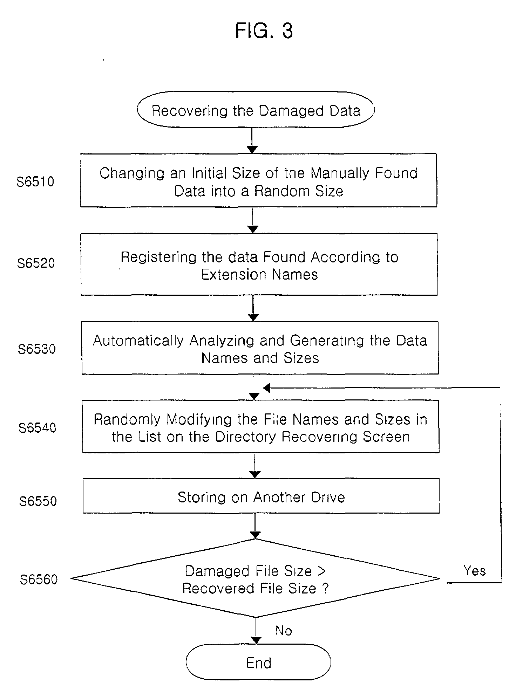

FIG. 3 is a flow chart providing a detailed explanation of the step of recovering the damaged data represented in FIG. 2.

Referring to FIG. 3, the initial size of the data manually found in a setup environment is changed to a random size in step S6510.

The data which were found according to extension names of the files are registered on a directory recovering screen in step S6520, and information on the data names and the sizes are analyzed and generated in step S6530.

When necessary, the user manually and randomly modifies the data names and their sizes in the list on the directory recovering screen in step S6540.

Necessary data are stored in a second drive differing from the first drive in step S6550. At this time, the second drive must have a storage capacity equal to or greater than that of the hard disk of first drive.

The size of the recovered data initially stored in the previous step S6550 is compared with that of the damaged data in step S6560, and if the size of the damaged data is greater than that of the recovered data, the process returns to the previous step S6540 so as to reallocate the names and sizes of the data.

If the size of the damaged data is smaller than that of the recovered data, a program for reading the recovered data is used to read the recovered data in a normal manner.

In the above, the present invention recovers the damaged data so that when a user deletes a directory and information on the deleted directory is lost, the data stored in the hard disk can be recovered.

In the preferred embodiment of the present invention, even when a directory that has damaged data has been deleted from the hard disk which has the damaged data, and even when the deleted directory information is also damaged, the damaged data can be recovered to its original state.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A data recovery method for recovering data when directory information in a hard disk having damaged data is damaged, comprising the steps of:
(a) detecting partition information from a hard disk drive having the damaged data;
(b) reading boot sector values from the hard disk drive;
(c) analyzing disk information according to the detected partition information and the boot sector values;
(d) determining a system to be a file allocation table (FAT) file system and recovering the data when the disk is found to use a FAT, and checking whether the disk uses a NTFS, and when the disk is found to use the NTFS, determining it to be a NTFS file system and recovering the data, and checking whether the disk uses a UNIX file system (UFS), and when the disk is found to use the UFS, determining it to be a UFS file system and recovering the data, and when it is not a UFS file system, recovering the data by an unknown file system;
(e) detecting the FAT information and storing the FAT information in a storege device when the disk information is determined to be FAT information in the above step (c);
(f) detecting root directory information and storing the root directory information in the storage device;
(g) detecting the damaged directory and the damaged file information from data sectors;
(h) analyzing directory information to be recovered by using the detected directory information in the step (g), and generating damaged directory information according to the analyzed directory information; and
(i) recovering the damaged directory by using damaged directory information, and recovering damaged data by using the recovered directory and file information, and storing the recovered data in a second hard disk.

2. The method of claim 1, wherein the step (i) comprises steps of:
(i-1) changing initial sizes of data to random sizes in a setup environment;
(i-2) registering data found by extension names on a directory recovering screen;
(i-3) analyzing and generating information on names and sizes of data by the program itself;
(i-4) randomly changing names and sizes of data in a list on the directory recovering screen;
(i-5) storing changed names and sizes of the data of the step (i-4); and
(i-6) checking sizes of stored data of step (i-5), and when the size is small, returning to the step (i-4).

3. A recording medium that can read by a computer storing a method for recovering data from damaged directory information having damaged data, the method comprising the steps of:
(i) detecting partition information from a first hard disk drive having damaged data;
(ii) reading a boot sector value from the first hard disk drive;
(iii) analyzing disk information using the detected partition information and read boot sector value;
(iv) determining that the disk information is a NTFS file system if the disk information is not FAT information , and recovering the NTFS file system;
(v) detecting FAT information if the disk information is FAT information and storing the FAT information in a storage device;
(vi) detecting root directory information and storing the root directory information in the storage device;
(vii) detecting damaged directory and damaged file information from a data sector;
(viii) analyzing directory information to be recovered using the detected directory information, and generating damaged directory information based on the analyzed directory information; and
(ix) recovering a damaged directory based on the damaged directory information, recovering damaged data based on the recovered directory and recovered file information, and storing the recovered damaged data on a second hard disk drive.

4. The method of claim 3, wherein the step (ix) comprises the steps of:
(ix-1) changing an initial size of data in an environment setting to a specific size;
(ix-2) registering found data according to extension on a screen in which the directory is recovered;
(ix-3) analyzing and generating data name and size information in a program;
(ix-4) changing a data name and size in a list on the screen in which the directory is recovered;
(ix-5) storing the changed data name and size; and
(ix-6) checking the data size, and if smaller than a size of data initially recovered, returning the process to step (ix-4).
